# FASCICULE DE BREVET EUROPEEN

(11) **EP 3 459 051 B1**
(45) Date de publication et mention de la délivrance du brevet: **27.05.2020**
(21) Numéro de dépôt: 17731202.2
(22) Date de dépôt: 17.05.2017
(51) Int. Cl.: G06T 7/557

(54) **PROCÉDÉ DE RECONSTRUCTION TRIDIMENSIONNELLE À L'AIDE D'UNE CAMÉRA PLÉNOPTIQUE**
DREIDIMENSIONALES REKONSTRUKTIONSVERFAHREN UNTER VERWENDUNG EINER PLENOPTISCHEN KAMERA
THREE-DIMENSIONAL RECONSTRUCTION METHOD USING A PLENOPTIC CAMERA

(30) Priorité: 20.05.2016 FR 1654548
(43) Date de publication de la demande: 27.03.2019
(73) Titulaire: Safran, 75015 Paris (FR)
(72) Inventeur: LE GUILLOUX, Yann, 77550 Moissy-Cramayel (FR)
(74) Mandataire: Brevalex
(86) Numéro de dépôt international: PCT/FR2017/051184
(87) Numéro de publication internationale: WO 2017/198945

(56) Documents cités:
- WEIMING LI ET AL: "Generic camera model and its calibration for computational integral imaging and 3D reconstruction", JOURNAL OF THE OPTICAL SOCIETY OF AMERICA A, vol. 28, no. 3, 1 mars 2011 (2011-03-01), page 318, XP055359842, US ISSN: 1084-7529, DOI: 10.1364/JOSAA.28.000318
- SEBASTIEN LEFEBVRE ET AL: "A 1D approach to correlation-based stereo matching", IMAGE AND VISION COMPUTING, ELSEVIER, GUILDFORD, GB, vol. 29, no. 9, 23 mai 2011 (2011-05-23), pages 580-593, XP028287041, ISSN: 0262-8856, DOI: 10.1016/J.IMAVIS.2011.05.003 [extrait le 2011-05-30]

## Description

### DOMAINE TECHNIQUE

L'invention concerne le domaine des caméras plénoptiques, permettant d'acquérir une scène en trois dimensions.

L'invention concerne plus particulièrement le domaine des procédés de reconstruction tridimensionnelle, utilisant une telle caméra.

La reconstruction tridimensionnelle d'une surface d'intérêt consiste à fournir une estimation des coordonnées en trois dimensions des points de cette surface.

### ÉTAT DE LA TECHNIQUE ANTÉRIEURE

Les caméras plénoptiques sont des systèmes de vision en trois dimensions utilisant un seul capteur photosensible, permettant d'obtenir une grande compacité.

La demande de brevet FR-1558338 décrit un exemple particulier d'une telle caméra.

Une caméra plénoptique est configurée pour acquérir une image en deux dimensions dans laquelle plusieurs pixels se rapportent à un même point de l'espace objet.

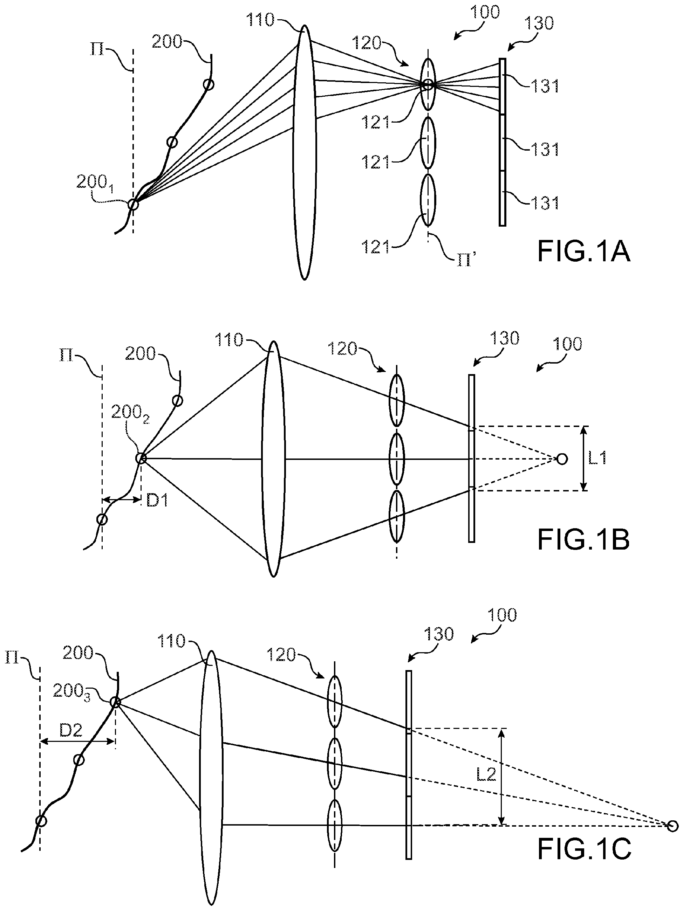

Les figures 1A à 1C illustrent de manière schématique une caméra plénoptique 100, et un procédé de reconstruction tridimensionnelle selon l'art antérieur.

La caméra plénoptique 100 comprend un système optique d'entrée 110, configuré pour recevoir des rayons lumineux provenant d'un objet à imager, ou surface d'intérêt 200.

Le système optique d'entrée 110 peut être constitué d'une unique lentille.

En variante, le système optique d'entrée 110 peut être constitué d'un ensemble de lentilles situées les unes derrière les autres, selon un axe de propagation de la lumière depuis la surface d'intérêt 200, vers le système optique d'entrée.

Le système optique d'entrée 110 réalise la conjugaison optique entre un plan objet π, et un plan image π' recevant une matrice 120 d'éléments optiques.

Les éléments optiques 121 sont par exemple des microlentilles, ou des sténopés, réparti(e)s de façon coplanaire dans le plan image π'.

Des microlentilles 121 peuvent présenter chacune une section non circulaire, par exemple pour réduire une distance entre des microlentilles voisines. Il peut s'agir de microlentilles plan-convexes, biconvexes, asphériques, etc.

Chacun des éléments optiques 121 reçoit des rayons lumineux provenant de la surface d'intérêt 200, et ayant traversé l'optique d'entrée 110.

Après traversée d'un élément optique 121, les rayons lumineux se propagent jusqu'à un capteur optique matriciel 130.

Le capteur optique matriciel 130 est un capteur photosensible, par exemple du type capteur CCD, configuré pour convertir un flux incident de photons en un signal électrique, pour former une image.

La surface de détection du capteur optique matriciel 130 est constituée d'une pluralité de pixels, agencés de préférence en lignes et en colonnes.

Elle est située à proximité de la matrice 120, par exemple entre 0,4 et 0,6 mm derrière les faces arrière des éléments optiques 121 (distance mesurée selon l'axe optique du système optique d'entrée).

La matrice 120 d'éléments optiques est configurée pour répartir, sur les pixels du capteur optique matriciel 130, des rayons lumineux provenant de la surface d'intérêt et ayant traversé le système optique d'entrée.

A chaque élément optique 121 correspond une sélection de pixels du capteur optique matriciel. Un rayon lumineux provenant de la surface d'intérêt 200 se dirige vers l'un de ces pixels, en fonction de son angle d'incidence sur l'élément optique 121.

Ladite sélection de pixels, associée à un même élément optique, forme un macro-pixel 131.

De préférence, il n'y a pas de chevauchement entre les différents macro-pixels. On évite ce chevauchement, notamment par un choix adéquat des distances focales du système optique d'entrée 110 et des éléments optiques 121.

Ainsi, des rayons lumineux provenant d'un même point sur la surface d'intérêt 200, se propagent à travers le système optique d'entrée 110, et la matrice d'éléments optiques 120, jusqu'à différents pixels du capteur optique matriciel 130.

La figure 1A illustre des tracés de rayons provenant d'un point 200₁ de la surface d'intérêt 200, situé dans le plan objet π. L'image de ce point se situe dans le plan image π', sur le centre optique d'un élément optique 121. En fonction de leur angle d'incidence sur l'élément optique 121, les rayons lumineux se propagent jusqu'à l'un ou l'autre des pixels du macro-pixel 131 correspondant.

L'ensemble des pixels du capteur optique matriciel 130, associés à ce point 200₁, appartiennent à ce même macro-pixel 131.

La figure 1B illustre des tracés de rayons provenant d'un point 200₂ de la surface d'intérêt 200, situé en dehors du plan objet π, à une distance D1 en aval de ce plan. L'image de ce point se situe hors du plan image π'. Des rayons lumineux se propagent depuis le point 200₂, vers l'image de ce point, en passant par les centres optiques de différents éléments optiques 121.

L'ensemble des pixels du capteur optique matriciel 130, associés à ce point 200₂, appartiennent à différents macro-pixels 131, et sont dispersés sur une surface de largeur L1.

La figure 1C illustre des tracés de rayons provenant d'un point 200₃ de la surface d'intérêt 200, situé en dehors du plan objet π, à une distance D2 supérieure à D1 en aval de ce plan. L'image de ce point se situe hors du plan image π'. Des rayons lumineux se propagent depuis le point 200₃, vers l'image de ce point, en passant par les centres optiques de différents éléments optiques 121.

L'ensemble des pixels du capteur optique matriciel 130, associés à ce point 200₃, appartiennent à différents macro-pixels 131, et sont dispersés sur une surface de largeur L2 supérieure à L1.

Ainsi, la dispersion dans l'espace des pixels du capteur optique matriciel associés à un même point de la surface d'intérêt, est liée à la distance entre ce point et le plan objet π.

Cette distance correspond à une coordonnée de profondeur de ce point.

On connaît dans l'art antérieur différents procédés de reconstruction tridimensionnelle, exploitant cette dépendance entre une coordonnée de profondeur et une dispersion sur les pixels du capteur optique matriciel.

On parle de reconstruction d'image épipolaire.

Il s'agit de réorganiser astucieusement, à partir d'une image acquise par la caméra plénoptique, la répartition des pixels de l'image associés à une même ligne d'éléments optiques 121 et à la ligne associée de macro-pixels 131 du capteur.

On peut notamment former, à partir des pixels de l'image associés à chaque ligne de macro-pixels 131, une série de colonnes de pixels de l'image. Chaque colonne de pixels de l'image correspond à un macro-pixel du capteur, dont les pixels sont agencés en fonction de leur position sur le macro-pixel.

Lorsqu'on image un point situé dans le plan objet (figure 1A), les pixels de l'image associés à ce point appartiennent alors à la même colonne de pixels.

Lorsqu'on image un point situé hors du plan objet (figure 1B ou 1C), les pixels de l'image associés à ce point appartiennent à des colonnes voisines de pixels, et forment ensemble des segments inclinés. L'inclinaison du segment permet d'obtenir la coordonnée de profondeur du point dans le champ objet de la caméra plénoptique.

Un exemple d'un tel procédé est décrit dans l'article « Generating EPI Representations of 4D Light Fields with a Single Lens Focused Plenoptic Camera », ISVC 2011, Part I, LNCS 6938, pp 90-101, par Sven Wanner, Janis Gehr et Bernd Jähne.

Un autre exemple est décrit dans l'article "Generic camera model and its calibration for computational integral imaging and 3D reconstruction", Journal Optical Society of America Vol. 28, No. 3, mars 2011 par W. Li et Y. Li.

Un inconvénient de ce procédé est que l'on ne forme qu'un segment par macro-pixel 131 et par élément optique 121. On n'obtient donc qu'une seule coordonnée de profondeur par élément optique 121. La résolution de la reconstruction tridimensionnelle est donc assez faible.

Un objectif de la présente invention est de proposer un procédé de reconstruction tridimensionnelle, à l'aide d'une image acquise par une caméra plénoptique, offrant une résolution meilleure que celle de la matrice d'éléments optiques.

### EXPOSÉ DE L'INVENTION

Cet objectif est atteint avec le procédé de reconstruction tridimensionnelle d'une surface d'intérêt, à l'aide d'une caméra plénoptique comprenant un système optique d'entrée, un capteur optique matriciel comprenant une pluralité de pixels, et une matrice d'éléments optiques disposée entre le système optique d'entrée et le capteur optique matriciel.

Le procédé selon l'invention comprend les étapes suivantes :
- détermination des coordonnées tridimensionnelles d'une série de points du champ objet de la caméra plénoptique, dits points d'échantillonnage ;
- détermination de données de calibration, associant à chaque point d'échantillonnage un ensemble d'au moins deux pixels du capteur optique matriciel ;
- définition d'une grille tridimensionnelle, dite grille de reconstruction, s'étendant dans le champ objet de la caméra plénoptique et dont chaque point est associé à un ou plusieurs point(s) d'échantillonnage ;
- acquisition d'au moins une image de la surface d'intérêt à l'aide de la caméra plénoptique ;
- à partir des données de calibration et de l'image de la surface d'intérêt, calcul, pour chaque point de la grille de reconstruction, de la valeur d'un indice de dissemblance, fonction d'une ou plusieurs dispersion(s), chacune étant une dispersion entre les valeurs d'intensité prises, sur l'image de la surface d'intérêt, par les pixels associés au point d'échantillonnage (Pⱼ) ou à l'un des points d'échantillonnage (Pⱼ) associé(s) audit point de la grille de reconstruction ;
- détermination d'une répartition tridimensionnelle des points de la grille de reconstruction, affectés chacun de leur valeur de l'indice de dissemblance ;
- reconstruction tridimensionnelle de la surface d'intérêt.

On parle de points d'échantillonnage, car ils réalisent un échantillonnage dans l'espace des points de l'ensemble du champ objet de la caméra plénoptique.

Chaque point de la grille de reconstruction est associé à un ou plusieurs point(s) d'échantillonnage.

Le terme « grille de reconstruction » désigne un nuage de points répartis dans l'espace.

Il peut s'agir d'une grille non régulière, dont les points sont constitués par exemple par les points d'échantillonnage eux-mêmes.

En variante, il peut s'agir d'une grille régulière, les points étant répartis dans l'espace, selon un maillage régulier défini par un pixel volumique élémentaire. Chaque point de la grille de reconstruction est alors associé à un ou plusieurs point(s) d'échantillonnage voisin(s), c'est-à-dire le ou les point(s) d'échantillonnage les plus proches dans l'espace.

En tout état de cause, le nombre de points de la grille de reconstruction est supérieur ou égal au nombre de points d'échantillonnage.

Chaque dispersion se rapporte à un point d'échantillonnage.

Il s'agit en particulier de la dispersion des valeurs d'intensité prises par les pixels associés à ce point d'échantillonnage, sur l'image acquise.

Une dispersion est représentative d'un éloignement plus ou moins grand des termes d'une série, les uns par rapport aux autres, ou par rapport à une valeur centrale choisie, ou moyenne.

La dispersion entre deux valeurs d'intensité désigne par exemple la différence, ou écart, entre ces deux valeurs d'intensité, ou une fonction dont la valeur augmente lorsque cette différence ou écart augmente.

La dispersion entre trois valeurs d'intensité ou plus désigne par exemple un écart-type entre ces trois valeurs d'intensité ou plus, ou une fonction dont la valeur augmente lorsque cet écart-type augmente. En variante, on peut remplacer l'écart-type par toute autre fonction des valeurs absolues des différences entre chaque valeur d'intensité et une moyenne desdites trois valeurs d'intensité ou plus.

Ainsi, la dispersion des valeurs d'intensité peut désigner par exemple un écart entre deux valeurs, ou un écart-type entre trois valeurs ou plus.

Une faible dispersion correspond à une grande probabilité que les pixels reçoivent des rayons lumineux provenant d'un même point de la surface d'intérêt, et donc que le point d'échantillonnage appartienne à la surface d'intérêt.

Une grande dispersion correspond à une faible probabilité que les pixels reçoivent des rayons lumineux provenant d'un même point de la surface d'intérêt, et donc que le point d'échantillonnage appartienne à la surface d'intérêt.

La valeur de l'indice de dissemblance associée à un point de la grille de reconstruction est fonction d'une telle dispersion, ou d'une combinaison de telles dispersions, selon que le point de la grille de reconstruction est associé à un ou à plusieurs points d'échantillonnage.

On peut ainsi identifier des points de la grille de reconstruction ayant une plus grande probabilité, ou une plus faible probabilité, d'appartenir à la surface d'intérêt.

La résolution de la reconstruction dépend donc du nombre de points de la grille de reconstruction, et n'est pas limitée par le nombre d'éléments optiques de la matrice d'éléments optiques.

On obtient ainsi aisément un procédé de reconstruction tridimensionnelle, offrant une résolution meilleure que celle de la matrice d'éléments optiques.

En particulier, cette résolution peut être au moins cinquante fois supérieure à la résolution de la matrice d'éléments optiques.

Chaque point d'échantillonnage est situé dans le champ objet de la caméra plénoptique, et est associé à au moins deux pixels du capteur optique matriciel. Il s'agit en d'autres termes d'un point d'intersection, situé dans le champ objet de la caméra plénoptique, entre deux rayons se propageant ensuite à travers le système d'entrée et un élément optique, chacun jusqu'à un pixel du capteur optique matriciel.

Les points d'échantillonnage s'étendent dans le champ objet de la caméra plénoptique, en aval du plan objet, et/ou en amont du plan objet, et/ou dans le plan objet. En d'autres termes, le procédé selon l'invention permet de réaliser une reconstruction tridimensionnelle d'une surface d'intérêt pouvant s'étendre en aval du plan objet, et/ou en amont du plan objet, et/ou dans le plan objet.

Selon un premier mode de réalisation de l'invention, les points de la grille de reconstruction sont constitués par les points d'échantillonnage, et l'indice de dissemblance d'un point de la grille de reconstruction est fonction d'une dispersion entre les valeurs d'intensité prises, sur l'image de la surface d'intérêt, par les pixels associés au point d'échantillonnage correspondant.

En variante, la grille de reconstruction est une grille régulière, et l'étape de calcul, pour chaque point de la grille de reconstruction, de la valeur d'un indice de dissemblance, comprend :
- une attribution, à tous les points de la grille de reconstruction situés à une distance d'un point d'échantillonnage supérieure à un seuil prédéterminé, d'une même valeur de l'indice de dissemblance, dite valeur d'extremum ; et
- pour chacun des autres points de la grille de reconstruction, un calcul, pour chaque point d'échantillonnage associé à ce point de la grille de reconstruction, de la dispersion entre les valeurs d'intensités prises sur l'image de la surface d'intérêt par les pixels associés audit point d'échantillonnage, et une combinaison des plusieurs dispersions calculées pour obtenir l'indice de dissemblance.

De préférence, la reconstruction tridimensionnelle met en œuvre la recherche d'une surface située dans le champ objet de la caméra plénoptique, passant par une série de points de la grille de reconstruction associée à une valeur cumulée minimale des valeurs de l'indice de dissemblance.

La reconstruction tridimensionnelle peut mettre en œuvre un algorithme de coupe minimale.

En variante, la reconstruction tridimensionnelle peut mettre en œuvre un algorithme de programmation dynamique, considérant des sous-ensembles d'éléments optiques de la matrice d'éléments optiques.

Les étapes de détermination des coordonnées tridimensionnelles des points d'échantillonnage et de détermination des données de calibration comprennent avantageusement les sous-étapes suivantes :
- pour chaque couple d'un élément optique de la matrice d'éléments optiques, et un pixel du capteur optique matriciel associé à cet élément optique, détermination d'un rayon image reliant le centre optique de l'élément optique et le centre du pixel ;
- pour chaque rayon image ainsi déterminé, calcul d'un rayon objet correspondant, conjugué du rayon image par le système optique d'entrée ;
- détermination de l'ensemble des points d'intersection entre au moins deux rayons objet, situés dans le champ objet de la caméra plénoptique, ces points d'intersection formant les points d'échantillonnage ; et
- détermination des données de calibration en identifiant, pour chaque point d'échantillonnage, les au moins deux rayons objet correspondant, ces rayons objet étant associés eux-mêmes à au moins deux rayons image, et au moins deux pixels du capteur optique matriciel.

En complément ou en variante, les étapes de détermination des coordonnées tridimensionnelles des points d'échantillonnage et de détermination des données de calibration comprennent avantageusement les sous-étapes suivantes :
- déplacement d'un point lumineux dans le champ objet de la caméra plénoptique ;
- pour chaque position du point lumineux, détermination de la présence ou l'absence d'au moins deux pixels illuminés sur le capteur optique matriciel, pour identifier les points d'échantillonnage ; et
- pour chaque point d'échantillonnage ainsi identifié, identification des au moins deux pixels illuminés, pour déterminer l'ensemble correspondant d'au moins deux pixels du capteur optique matriciel.

L'étape d'acquisition d'une image de la surface d'intérêt peut être mise en œuvre à l'aide d'une caméra plénoptique dans laquelle :
- les centres optiques des éléments optiques de la matrice d'éléments optiques sont répartis selon une grille de répartition, aux points d'intersection entre une première série de lignes droites et une seconde série de lignes droites de cette grille de répartition ; et
- les lignes de la première série de lignes de la grille de répartition sont réparties à intervalles irréguliers et/ou les lignes de la seconde série de lignes de la grille de répartition sont réparties à intervalles irréguliers.

En particulier, l'étape d'acquisition d'une image de la surface d'intérêt peut être mise en œuvre à l'aide d'une caméra plénoptique dans laquelle les distances entre deux lignes directement voisines de la première série de lignes de la grille de répartition sont comprises entre 95% et 105% d'une première valeur moyenne, et/ou les distances entre deux lignes directement voisines de la seconde série de lignes de la grille de répartition sont comprises entre 95% et 105% d'une seconde valeur moyenne pouvant être égale à la première valeur moyenne.

En complément ou en variante, l'étape d'acquisition d'une image de la surface d'intérêt peut être mise en œuvre à l'aide d'une caméra plénoptique dans laquelle les distances entre deux lignes directement voisines de la première série de lignes de la grille de répartition sont réparties de façon aléatoire, et/ou les distances entre deux lignes directement voisines de la seconde série de lignes de la grille de répartition sont réparties de façon aléatoire.

L'étape d'acquisition d'une image de la surface d'intérêt peut être mise en œuvre à l'aide d'une caméra plénoptique dans laquelle :
- les centres optiques des éléments optiques de la matrice d'éléments optiques sont répartis selon une grille de répartition, aux points d'intersection entre une première série de lignes et une seconde série de lignes de cette grille de répartition ;
- une grille objet, dont la grille de répartition est l'image par le système optique d'entrée, est constituée d'une première série de lignes droites, parallèles entre elles, et d'une seconde série de lignes droites, parallèles entre elles et sécantes avec les lignes de la première série de lignes ; et
- les lignes de la première et de la seconde séries de lignes de la grille de répartition comprennent une pluralité de lignes courbes.

Selon un mode de réalisation avantageux, l'étape d'acquisition d'une image de la surface d'intérêt est mise en œuvre à l'aide d'une caméra plénoptique dans laquelle les lignes de la première série de lignes de la grille objet sont réparties à intervalles irréguliers et/ou les lignes de la seconde série de lignes de la grille objet sont réparties à intervalles irréguliers.

Le procédé selon l'invention peut comprendre l'acquisition de plusieurs images de la surface d'intérêt à l'aide de la caméra plénoptique, associées à une pluralité de conditions d'éclairage de la surface d'intérêt, et l'indice de dissemblance associé à chaque point de la grille de reconstruction, est alors obtenu en combinant des dispersions associées à un même point d'échantillonnage et à chacune parmi les plusieurs conditions d'éclairage.

L'invention concerne également un dispositif de reconstruction tridimensionnelle comprenant une caméra plénoptique, et configuré pour mettre en œuvre les étapes du procédé selon l'invention, comprenant :
- une mémoire, pour stocker les données de calibration ; et
- des moyens de calcul, configurés pour déterminer les coordonnées tridimensionnelles des points d'échantillonnage ainsi que les données de calibration, et pour recevoir en entrée l'image acquise par la caméra plénoptique et les données de calibration, calculer la valeur de l'indice de dissemblance pour chaque point de la grille de reconstruction, déterminer une répartition tridimensionnelle des points de la grille de reconstruction affectés chacun de leur valeur de l'indice de dissemblance, et fournir en sortie une reconstruction tridimensionnelle de la surface d'intérêt.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés parmi lesquels :
- les figures 1A à 1C illustrent de manière schématique une caméra plénoptique;
- la figure 2 illustre de manière schématique des points d'échantillonnage selon l'invention ;
- la figure 3 illustre selon une vue détaillée des points d'échantillonnage selon l'invention ;
- la figure 4 illustre de manière schématique des étapes d'un procédé selon l'invention ;
- les figures 5A et 5B illustrent respectivement, un premier mode de réalisation d'une matrice d'éléments optiques utilisée dans le procédé selon l'invention, et une répartition correspondante des points d'échantillonnage dans le champ objet de la caméra plénoptique ;
- les figures 6A et 6B illustrent respectivement, un deuxième mode de réalisation d'une matrice d'éléments optiques utilisée dans le procédé selon l'invention, et une répartition correspondante des points d'échantillonnage dans le champ objet de la caméra plénoptique ;
- les figures 7A et 7B illustrent un troisième mode de réalisation d'une matrice d'éléments optiques utilisée dans le procédé selon l'invention ; et
- la figure 8 illustre un quatrième mode de réalisation d'une matrice d'éléments optiques utilisée dans le procédé selon l'invention.

### EXPOSÉ DÉTAILLÉ DE MODES DE RÉALISATION PARTICULIERS

Une idée à la base de l'invention consiste à travailler à l'échelle du pixel du capteur optique matriciel, et non plus à l'échelle du macro-pixel.

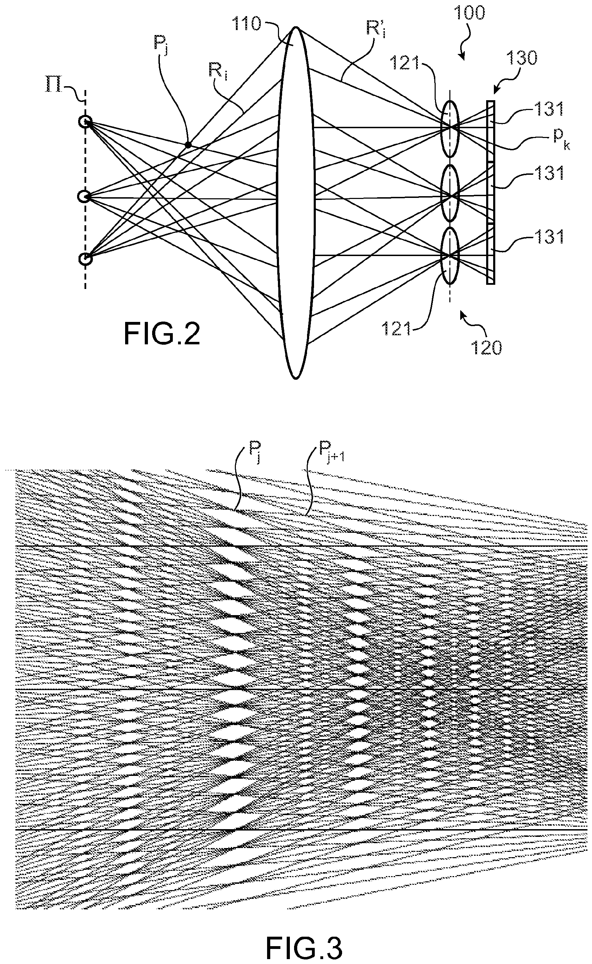

La figure 2 illustre de manière schématique une caméra plénoptique 100.

A chaque élément optique 121 correspond un macro-pixel 131, et une pluralité de rayons image R'ᵢ se propageant en ligne droite en passant par le centre optique de cet élément optique 121.

Chaque rayon image R'ᵢ se propage en ligne droite, dans l'espace image du système optique d'entrée 110, en passant par le centre optique d'un élément optique 121, et le centre d'un pixel pₖ du macro-pixel 131 correspondant.

L'espace image du système optique d'entrée 110 désigne l'espace situé en aval du système optique d'entrée, selon le sens de propagation de la lumière, de la surface d'intérêt vers le système optique d'entrée.

Lorsque les éléments optiques 121 sont des sténopés, le centre optique désigne le centre géométrique du trou formant un sténopé.

Lorsque les éléments optiques 121 sont des microlentilles, le centre optique est situé sur l'axe optique d'une microlentille, et correspond au point de la microlentille, tel qu'un rayon lumineux incident en ce point n'est pas dévié par cette microlentille.

A chaque rayon image R'ᵢ correspond un rayon objet Rᵢ situé dans l'espace objet du système optique d'entrée 110, qui est le conjugué du rayon image R'ᵢ par le système optique d'entrée 110.

L'espace objet du système optique d'entrée 110 désigne l'espace situé en amont du système optique d'entrée, selon le sens de propagation de la lumière, de la surface d'intérêt vers le système optique d'entrée.

L'ensemble des rayons objet Rᵢ, associés à tous les éléments optiques 121 de la matrice 120, définissent une multitude de points d'intersection Pⱼ, situés dans l'espace objet du système optique d'entrée 110.

Ces points d'intersection Pⱼ forment des points d'échantillonnage de l'espace objet du système optique d'entrée 110, et plus particulièrement du champ objet de la caméra plénoptique.

Le champ objet de la caméra plénoptique désigne son champ de vision, c'est-à-dire l'espace situé en amont du système optique d'entrée, et pouvant être imagé à l'aide de la caméra plénoptique.

Puisque les points d'intersection Pⱼ correspondent à des points imagés sur le capteur optique matriciel, ils se trouvent dans le champ objet de la caméra plénoptique.

Chaque point d'échantillonnage Pⱼ est associé à au moins deux rayons objet Rᵢ, et donc aux rayons image R'ᵢ et aux pixels correspondant pₖ du capteur optique matriciel.

Une idée à la base de l'invention consiste à répertorier, pour une caméra plénoptique en particulier, l'ensemble de ces points d'échantillonnage, et pour chacun de ces points d'échantillonnage, les au moins deux pixels associés du capteur optique matriciel.

Ensuite, en comparant des pixels prédéterminés sur une image acquise par la caméra plénoptique, on peut savoir notamment à proximité de quels points d'échantillonnage passe la surface d'intérêt.

La détermination des coordonnées tridimensionnelles de ces points d'échantillonnage Pⱼ, et, pour chacun de ces points, des pixels pₖ associés, est mise en œuvre dans des étapes préliminaires de calibration de la caméra plénoptique 100.

En effet, ces données sont fonction des caractéristiques optique et géométrique de la caméra plénoptique 100.

On peut réaliser cette calibration en calculant l'ensemble des rayons image R'ᵢ, à partir des géométries de la matrice d'éléments optiques et du capteur optique matriciel, puis en calculant l'ensemble des rayons objet Rᵢ correspondant, et enfin l'ensemble des points d'intersection entre les rayons objet, dans le champ objet de la caméra plénoptique.

Dans une première étape, on détermine les coordonnées tridimensionnelles des points d'intersection entre les rayons objet, dans le champ objet de la caméra plénoptique, ces points d'intersection formant les points d'échantillonnage Pⱼ.

Dans une deuxième étape, on associe à chaque point d'échantillonnage Pⱼ les au moins deux pixels correspondant du capteur optique matriciel 130. L'ensemble formé par les points d'échantillonnage Pⱼ, associés chacun à au moins deux pixels correspondant du capteur optique matriciel 130, forme des données de calibration.

En complément ou en variante, on obtient ces données de calibration en déplaçant un point lumineux dans le champ objet de la caméra plénoptique.

On identifie ainsi des positions du point lumineux telles qu'au moins deux pixels du capteur optique matriciel soient illuminés. Ces points forment les points d'échantillonnage Pⱼ.

Pour chaque point d'échantillonnage ainsi déterminé, les pixels correspondant du capteur optique matriciel sont les pixels illuminés associés à cette position du point lumineux. On associe ainsi, à chaque point d'échantillonnage, au moins deux pixels du capteur optique matriciel, pour former les données de calibration.

En pratique, on peut positionner un écran normal à l'axe optique de la caméra plénoptique 100, et allumer sélectivement tour à tour chaque pixel de l'écran, pour différentes positions de l'écran le long de l'axe optique.

Pour chaque pixel de l'écran et chaque position de l'écran, on détermine les deux pixels ou plus dont la valeur est supérieure à un seuil prédéterminé (les plus éclairés).

Les différentes positions de l'écran sont espacées d'un pas inférieur à la résolution recherchée pour la caméra plénoptique 100.

On peut ainsi prendre en compte des imperfections du système réel que forme la caméra plénoptique, pour la calibration. On peut ainsi affiner une détermination grossière de données de calibration, obtenues par calcul des rayons objet Rᵢ.

La figure 3 illustre, selon une vue détaillée, des points d'échantillonnage Pⱼ selon l'invention, situés dans le champ objet d'une caméra plénoptique.

On a notamment illustré un point d'échantillonnage Pⱼ, à l'intersection de quatre rayons objet, et donc associés à quatre pixels du capteur optique matriciel, et un point d'échantillonnage Pⱼ₊₁, à l'intersection de deux rayons objet, et donc associés à deux pixels du capteur optique matriciel.

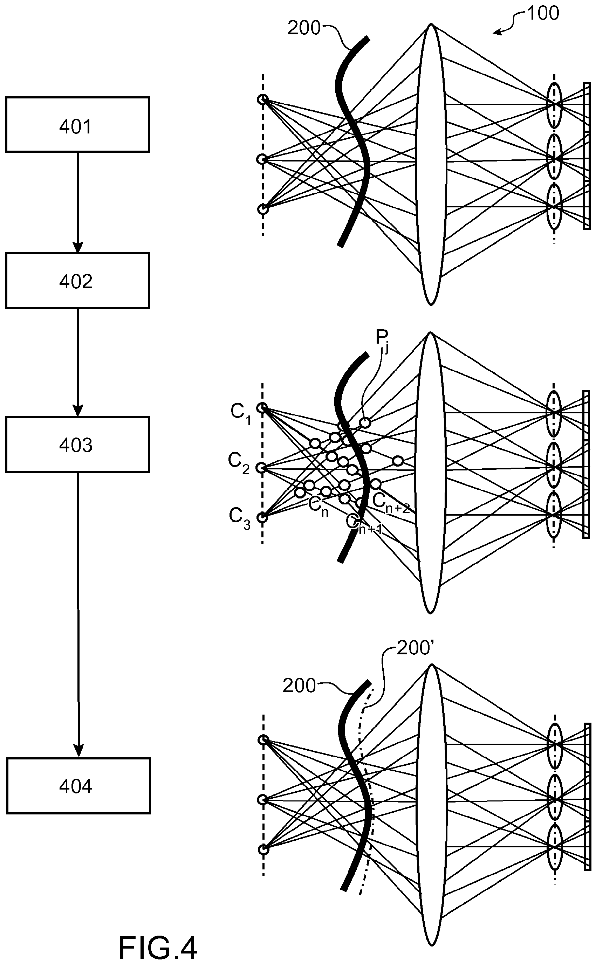

On va maintenant illustrer, en référence à la figure 4, des étapes d'un procédé selon l'invention.

Le procédé est illustré à l'aide d'un ordinogramme, et d'une série de représentations schématiques de la caméra plénoptique.

Les étapes préliminaires de détermination des coordonnées des points d'échantillonnage, et de détermination de données de calibration, ne sont pas représentées en figure 4.

On n'a pas représenté non plus une étape de détermination de définition d'une grille de reconstruction, qui sera utilisée ensuite pour reconstruire la surface d'intérêt.

Dans l'exemple illustré en figure 4, et par souci de simplification des explications, on détaille le cas particulier dans lequel les points de la grille de reconstruction sont constitués par les points d'échantillonnage eux-mêmes.

Dans une première étape 401, on acquiert une image d'une surface d'intérêt 200, à l'aide de la caméra plénoptique 100, la surface d'intérêt 200 étant située dans le champ objet de cette caméra.

On a représenté à droite la surface d'intérêt 200 et la caméra plénoptique 100, ainsi qu'une série de rayons de construction des points d'échantillonnage associés à ladite caméra 100.

La caméra plénoptique 100 est associée à des données de calibration telles que définies ci-avant, et préalablement déterminées.

Ces données de calibration associent chaque point d'échantillonnage Pⱼ à au moins deux pixels du capteur optique matriciel de la caméra plénoptique.

En particulier, chaque point d'échantillonnage Pⱼ est défini par des coordonnées en trois dimensions, dans le champ objet de la caméra plénoptique.

Dans une deuxième étape 402, on calcule, pour chaque point de la grille de reconstruction, donc ici pour chaque point d'échantillonnage Pⱼ, la valeur d'un indice de dissemblance Cₙ.

Ce calcul est mis en œuvre à l'aide des données de calibration de la caméra plénoptique, et de l'image acquise à l'étape 401.

L'indice de dissemblance Cₙ est un indice relatif ici à un unique point d'échantillonnage Pⱼ, dont la valeur dépend de la dispersion entre les valeurs d'intensité prises par les pixels du capteur optique matriciel, associés à ce point d'échantillonnage.

Par exemple, lorsque seulement deux pixels sont associés à un point d'échantillonnage Pⱼ, l'indice de dissemblance Cₙ peut être la différence en valeur absolue entre les valeurs d'intensité prises par ces deux pixels, ou une autre fonction de cette différence (carré de la différence par exemple) ou une autre fonction du couple de valeurs d'intensité.

En variante, pour des points d'échantillonnage associés à trois pixels ou plus, l'indice de dissemblance Cₙ peut être l'écart quadratique moyen entre les valeurs d'intensité prises par ces pixels, et une moyenne de ces valeurs d'intensité. En variante, il s'agit d'une autre fonction des différences, en valeur absolue, entre les valeurs d'intensité prises par ces pixels, et une moyenne de ces valeurs d'intensité, ou une autre fonction de cet ensemble de valeurs d'intensité.

En tout état de cause, la valeur de l'indice de dissemblance Cₙ d'un point de la grille de reconstruction est d'autant plus faible que pour chacun des points d'échantillonnage associés, les valeurs d'intensité des pixels correspondant sont proches.

Ici, la valeur de l'indice de dissemblance Cₙ d'un point de la grille de reconstruction confondu avec un point d'échantillonnage est d'autant plus faible que les valeurs d'intensité des pixels correspondant sont proches.

La valeur d'intensité prise par un pixel est de préférence un niveau de gris.

Il s'agit de préférence d'une valeur située entre 0 et 255 inclus, pour un encodage de l'image sur 8 bits.

Dans des conditions idéales, en particulier lorsque la surface d'intérêt forme une source lambertienne, lorsqu'un point d'échantillonnage Pⱼ appartient à la surface d'intérêt, les valeurs des pixels correspondant sont égales.

En pratique, ces valeurs ne sont pas forcément égales, mais plus proches que si le point d'échantillonnage Pⱼ n'appartenait pas à la surface d'intérêt.

Plus le point d'échantillonnage est proche d'un point de la surface d'intérêt, plus les valeurs d'intensité des pixels correspondant sont proches.

On voit donc que la valeur prise par un indice de dissemblance se rapporte à une probabilité que le point correspondant de la grille de reconstruction appartienne à la surface d'intérêt 200. L'indice de dissemblance peut être considéré comme fonction d'une estimation de cette probabilité.

A l'issue de l'étape 402, on dispose d'une série de valeurs d'indice de dissemblance Cₙ, associées chacune à un point de la grille de reconstruction, confondu ici avec un point d'échantillonnage.

A l'étape 403, on construit une répartition tridimensionnelle des points de la grille de reconstruction, ici les points d'échantillonnage Pⱼ, affectés chacun de la valeur correspondante de l'indice de dissemblance Cₙ.

On a représenté à droite cette répartition tridimensionnelle.

Il s'agit en d'autres termes d'une distribution en trois dimensions des valeurs de l'indice de dissemblance Cₙ, chaque valeur étant associée aux coordonnées en trois dimensions d'un point de la grille de reconstruction, ici un point d'échantillonnage Pⱼ.

A l'étape 404, on utilise cette distribution pour réaliser une reconstruction tridimensionnelle de la surface d'intérêt.

En d'autres termes, on fournit une estimation 200' des coordonnées en trois dimensions de la surface d'intérêt 200.

Cette étape de reconstruction exploite le fait que les valeurs d'indice de dissemblance se rapportent à une probabilité que le point de la grille de reconstruction correspondant appartienne ou non à la surface d'intérêt 200.

La reconstruction tridimensionnelle met en œuvre un algorithme d'optimisation, utilisant les indices de dissemblance Cₙ et les coordonnées tridimensionnelles associées.

L'idée générale est de rechercher une surface passant à proximité des points d'échantillonnage associés à une forte probabilité d'appartenance à la surface d'intérêt, et passant à distance des points d'échantillonnage associés à une faible probabilité d'appartenance à la surface d'intérêt.

De préférence, la distribution en trois dimensions des valeurs de l'indice de dissemblance Cₙ forme une fonction de coût, pour un algorithme d'optimisation.

En particulier, on recherche, à l'étape 404, une surface couvrant le champ objet de la caméra plénoptique, et associée à une valeur cumulée minimale des indices de dissemblance.

La reconstruction tridimensionnelle peut mettre en œuvre un algorithme d'optimisation de type coupe minimale, ou minimum cut, en anglais, visant à minimiser une fonction de coût définie dans le champ objet de la caméra plénoptique, à l'aide des indices de dissemblance Cₙ et des coordonnées tridimensionnelles associées.

Un tel algorithme offre une grande précision de la reconstruction tridimensionnelle.

En variante, la reconstruction tridimensionnelle peut mettre en œuvre un algorithme d'optimisation de type programmation dynamique.

Un tel algorithme offre une grande rapidité de calcul.

Il consiste à considérer l'optimisation dans le champ objet de la caméra plénoptique comme une combinaison d'optimisations dans plusieurs portions composant ce champ objet, chaque portion étant associée à une sélection d'éléments optiques 121, nommée sous-ensemble d'éléments optiques.

En particulier, les centres optiques des éléments optiques sont répartis selon une grille de répartition, aux points d'intersection entre une première série de lignes et une seconde série de lignes de cette grille de répartition, et les sous-ensembles correspondent aux éléments optiques associés à une même ligne de la première série, respectivement la seconde série de lignes.

Par exemple, les éléments optiques de la matrice d'éléments optiques sont agencés en lignes et colonnes, et on considère séparément les portions du champ objet associées à chaque ligne, respectivement à chaque colonne d'éléments optiques.

La reconstruction tridimensionnelle peut utiliser des hypothèses sur la surface d'intérêt.

Par exemple, on suppose que la surface d'intérêt 200 est une surface lisse.

En complément ou en variante, on suppose que la surface d'intérêt 200 est une surface connexe.

Le procédé selon l'invention permet de réaliser une reconstruction tridimensionnelle haute résolution, sans se limiter à la résolution de la matrice d'éléments optiques.

La résolution obtenue est typiquement de l'ordre de 10 µm, alors que le pas des éléments optiques est de 1 mm, soit un rapport 100 entre les deux.

En outre, il n'est pas limité par les difficultés liées à l'identification, sur une image acquise par une caméra plénoptique, de plusieurs pixels associés à un même point du champ objet.

En effet, au lieu de partir de l'image, d'y rechercher des pixels associés à un même point du champ objet de la caméra plénoptique, et de calculer par triangulation les intersections correspondantes entre des rayons objet, on part directement d'ensembles de pixels connus pour être associés à un même point du champ objet.

On peut considérer que le procédé selon l'invention met en œuvre des principes proches de la vision stéréoscopique, en ce qu'il est basé sur des recherches d'intersections de rayons provenant d'un même point de la surface d'intérêt. Il diffère cependant fondamentalement de ce domaine en ce qu'il n'utilise pas deux caméras classiques placées en deux endroits différents. Dans une caméra classique, il n'y a pas de matrice d'éléments optiques.

L'invention concerne également un dispositif de reconstruction tridimensionnelle, non représenté, comprenant :
- une caméra plénoptique 100, pour l'acquisition d'une image de la surface d'intérêt 200 ;
- une mémoire, recevant les données de calibration liées à ladite caméra plénoptique, et le cas échéant des données de définition de la grille de reconstruction ; et
- des moyens de calcul, recevant en entrée l'image acquise par la caméra plénoptique, ainsi que les données de calibration, et le cas échéant des données relatives à la grille de reconstruction, et fournissant en sortie une reconstruction tridimensionnelle de la surface d'intérêt.

Les moyens de calcul comprennent notamment un processeur, et sont agencés pour mettre en œuvre les étapes 402, 403 et 404 telles que décrites ci-avant.

Les moyens de calcul sont configurés en outre pour déterminer les coordonnées des points d'échantillonnage et les données de calibration associées à la caméra plénoptique, pour les stocker ensuite dans la mémoire.

On décrit ensuite une variante de l'invention, dans laquelle les points de la grille de reconstruction sont répartis dans l'espace de manière régulière, par exemple selon un maillage cubique.

Ils se distinguent alors des points d'échantillonnage Pⱼ. La valeur de l'indice de dissemblance associée à un point de la grille de reconstruction est alors une combinaison de dispersions telles que définies ci-avant, associées à des points d'échantillonnage Pⱼ voisins de ce point de la grille de reconstruction.

Ainsi, là-encore, la valeur prise par un indice de dissemblance se rapporte à une probabilité que le point correspondant de la grille de reconstruction appartienne à la surface d'intérêt.

Avantageusement, on calcule la dispersion telle que définie ci-avant, pour chacun des points d'échantillonnage Pⱼ, puis on détermine la valeur de l'indice de dissemblance des points de la grille de reconstruction par interpolation des valeurs de dispersion associées à chaque point d'échantillonnage Pⱼ, en fonction des positions de ces points d'échantillonnage dans le champ objet.

Toute autre combinaison de ces valeurs de dispersion peut être envisagée.

La contribution de la dispersion d'un point d'échantillonnage voisin peut par exemple être pondérée par l'inverse de sa distance au point considéré de la grille de reconstruction.

On peut calculer directement un indice de dissemblance pour chaque point de la grille de reconstruction, sans passer formellement par une étape distincte de calcul des dispersions de chacun des points d'échantillonnage Pⱼ.

La répartition tridimensionnelle de valeurs d'indice de vraisemblance ainsi obtenue permet d'obtenir une reconstruction tridimensionnelle de la surface d'intérêt, comme décrit ci-avant.

On peut déterminer une distance maximale au point d'échantillonnage le plus proche, dite valeur de seuil.

On identifie l'ensemble des points de la grille de reconstruction, situés à une distance au point d'échantillonnage le plus proche, supérieure à cette valeur de seuil.

A tous ces points, on affecte la même valeur de l'indice de dissemblance Cₙ.

On fixe ainsi une valeur maximale de l'indice de dissemblance des points de la grille de reconstruction.

Il peut s'agir d'une valeur supérieure à la valeur maximale des dispersions associées aux points d'échantillonnage Pⱼ.

Afin de consolider les résultats obtenus à l'aide d'un procédé selon l'invention, on peut éclairer successivement la surface d'intérêt à l'aide de différents types d'éclairages, et acquérir à chaque fois une image différente à l'aide de la caméra plénoptique 100.

Les types d'éclairage peuvent différer par une intensité lumineuse de l'éclairage, par une position de la source d'éclairage, par une texture (une texture peut être projetée d'une source unique émettant des intensités différentes selon les directions, ou de plusieurs sources émettant à différentes intensités lumineuses).

La caméra plénoptique reste fixe relativement à la surface d'intérêt, au cours de cette série d'acquisitions.

Pour chaque point de la grille de reconstruction, on calcule un indice de dissemblance, qui combine cette fois des informations provenant de plusieurs images.

En particulier, on remplace une dispersion associée à un point d'échantillonnage, par une combinaison de dispersions associées à ce même point d'échantillonnage et calculées chacune à partir de l'une des images acquises.

La combinaison de dispersion est par exemple une moyenne, ou une autre fonction des dispersions obtenues sur les plusieurs images acquises.

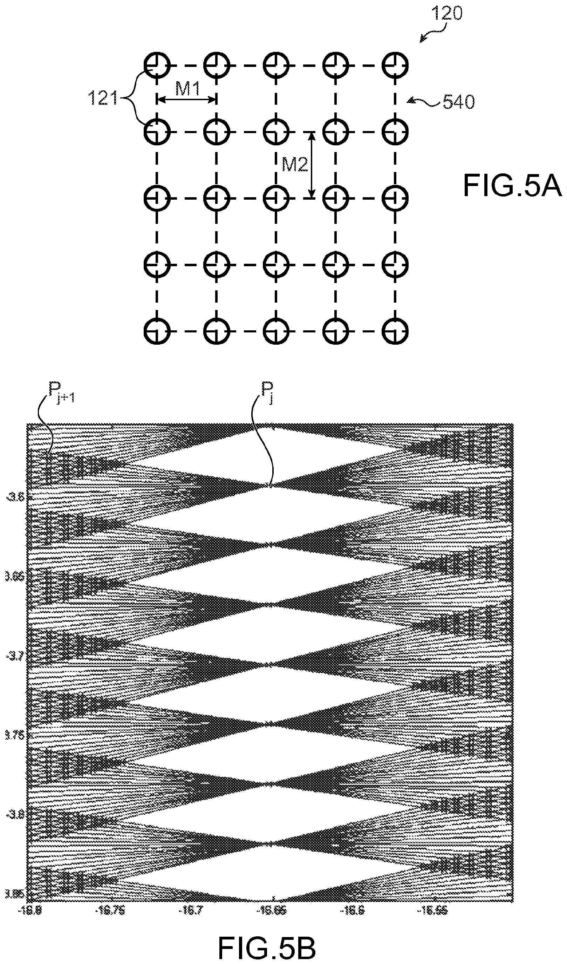

Les figures 5A et 5B illustrent respectivement, un premier mode de réalisation d'une matrice d'éléments optiques 120 d'une caméra plénoptique utilisée dans le procédé selon l'invention, et une répartition correspondante des points d'échantillonnage Pⱼ dans le champ objet de la caméra plénoptique.

Les centres optiques des éléments optiques 221 sont répartis selon une grille de répartition 540 (représentée en traits pointillés), aux points d'intersection entre une première série de lignes droites (ici des lignes verticales), et une seconde série de lignes droites (ici des lignes horizontales) sécantes (de préférence perpendiculaires) avec les lignes droites de la première série.

Ici, les lignes de la première série de lignes sont réparties régulièrement, selon un pas de répétition M1, et les lignes de la seconde série de lignes sont réparties régulièrement, selon un pas de répétition M2 (éventuellement égal à M1).

En d'autres termes, les éléments optiques sont répartis en lignes et colonnes, la distance qui sépare deux lignes adjacentes, respectivement deux colonnes adjacentes, étant la même dans toute la matrice d'éléments optiques.

La répartition des points d'échantillonnage dans le champ objet est du type de celle illustrée en figure 3.

Il existe de nombreuses intersections multiples.

Dans le voisinage des intersections multiples, il existe des régions dans le champ objet de la caméra plénoptique, recevant très peu de points d'échantillonnage, limitant la qualité de la reconstruction tridimensionnelle si la surface d'intérêt se trouve dans ces régions.

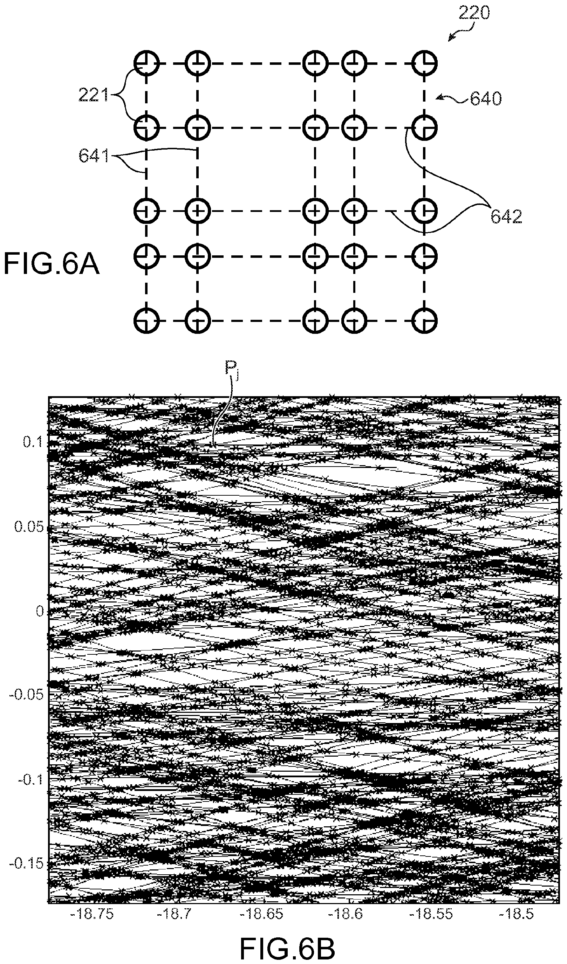

Les figures 6A et 6B illustrent respectivement, un deuxième mode de réalisation d'une matrice d'éléments optiques 220 d'une caméra plénoptique utilisée dans le procédé selon l'invention, et une répartition correspondante des points d'échantillonnage Pⱼ dans le champ objet de la caméra plénoptique.

Les centres optiques des éléments optiques 221 sont répartis selon une grille de répartition 640, comme décrit ci-avant.

Ici, les lignes 641 de la première série de lignes de la grille de répartition sont réparties de façon irrégulière.

Il peut s'agir plus particulièrement d'une répartition aléatoire, autour d'une première valeur moyenne, et à l'intérieur d'un premier intervalle prédéterminé.

La première valeur moyenne est la moyenne des distances entre deux lignes 641 directement voisines.

Une répartition aléatoire de valeurs désigne une répartition dont les valeurs sont soumises au hasard.

Par exemple, une borne inférieure du premier intervalle est 95% de ladite première valeur moyenne, et une borne supérieure du premier intervalle est 105% de ladite première valeur moyenne.

En variante, une borne inférieure est 90% de ladite première valeur moyenne, et une borne supérieure est 110% de ladite première valeur moyenne.

De la même façon, les lignes 642 de la seconde série de lignes de la grille de répartition sont réparties de façon irrégulière.

Les valeurs de distance entre deux lignes 642 directement voisines sont réparties, de préférence aléatoirement, autour d'une seconde valeur moyenne, et à l'intérieur d'un second intervalle prédéterminé.

Les bornes inférieure et supérieure du second intervalle sont définies de la même façon que celles du premier intervalle.

La seconde valeur moyenne est la moyenne des distances entre deux lignes 642 directement voisines.

Les première et seconde valeurs moyennes peuvent être égales.

En d'autres termes, les éléments optiques sont répartis en lignes et colonnes, la distance qui sépare deux lignes adjacentes, respectivement deux colonnes adjacentes, étant irrégulière. Cette distance est distincte pour au moins deux paires de lignes adjacentes, respectivement au moins deux paires de colonnes adjacentes.

La répartition des points d'échantillonnage dans le champ objet est illustrée en figure 6B.

Les points d'échantillonnage sont répartis de façon plus homogène qu'en figure 5B.

Par conséquent, il n'existe pas de région dans le champ objet de la caméra plénoptique, limitant la qualité de la reconstruction tridimensionnelle si la surface d'intérêt se trouvait dans cette région.

L'irrégularité permet donc de minimiser la plus grande distance entre tout point du champ objet de la caméra plénoptique et le point d'échantillonnage le plus proche.

Ce mode de réalisation correspond à une application astucieuse de l'enseignement de la demande de brevet FR-1558338, à la présente invention dans laquelle il est avantageux de disposer d'une répartition homogène des points d'échantillonnage.

Les modes de réalisation des figures 5A et 6A peuvent être combinés, les lignes d'une série de lignes étant réparties de façon régulière, et les lignes de l'autre série de lignes étant réparties de façon irrégulière.

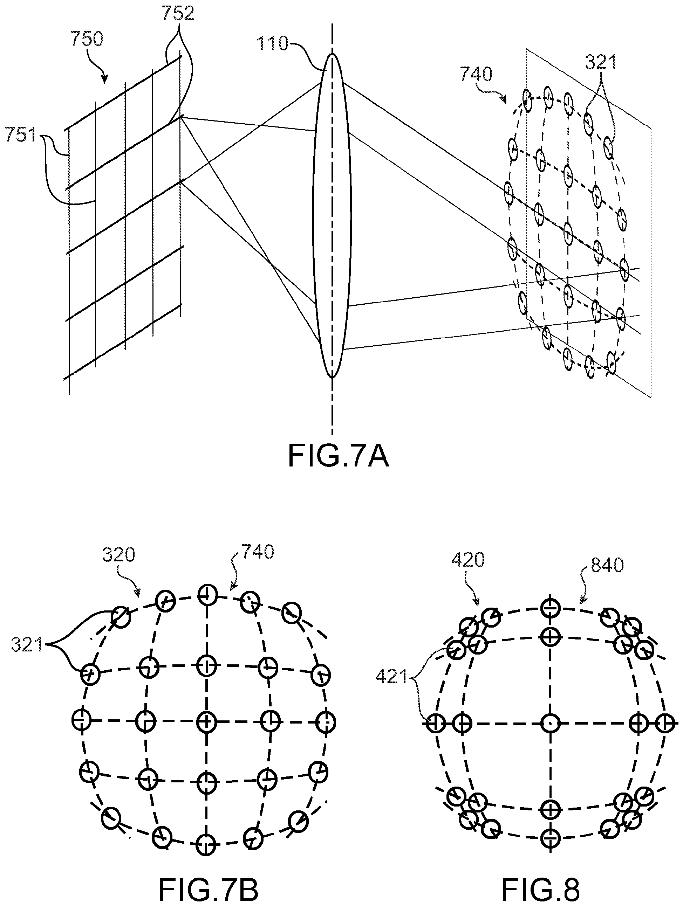

Les figures 7A et 7B illustrent un troisième mode de réalisation d'une matrice 320 d'éléments optiques d'une caméra plénoptique utilisée dans le procédé selon l'invention.

Selon ce mode de réalisation, le système d'optique d'entrée 110 de la caméra plénoptique présente une aberration optique de distorsion.

La grille de répartition 740 telle que définie ci-avant est cette fois l'image, par le système d'optique d'entrée 110, d'une grille objet 750 constituée d'une première série de lignes droites 751 (ici verticales) et d'une seconde série de lignes droites 752 (ici horizontales).

La grille de répartition 740 est déformée par la distorsion du système optique d'entrée. Chaque série de lignes est formée ici d'une ligne droite centrale entourée de part et d'autre par des lignes courbes, caractéristiques d'une distorsion en barillet.

Cette grille de répartition 740 permet que l'aberration de distorsion que présente le système optique d'entrée ne réduise pas le nombre de points d'échantillonnage du champ objet de la caméra plénoptique.

L'invention n'est pas limitée à une telle distorsion, le système optique d'entrée pouvant présenter une distorsion en coussinet, ou une combinaison d'une distorsion en barillet et une distorsion en coussinet.

Ici, le terme « grille » n'est pas limité à une grille carrée ou rectangulaire, formée d'une première série de lignes horizontales et d'une seconde série de lignes verticales.

Selon l'invention, la grille de répartition 740 peut notamment désigner une grille carrée ou rectangulaire déformée. Dans ce cas, la grille de répartition est formée d'une première série de lignes qui ne se croisent pas, et d'une seconde série de lignes qui ne se croisent pas. Chaque ligne de la première série de ligne croise toutes les lignes de la seconde série de lignes. Des lignes de la première et/ou de la seconde séries de lignes sont des lignes courbes.

A la figure 7A, l'espace objet, en amont du système optique d'entrée 110, est représenté selon une vue en perspective selon un premier angle de vue, et l'espace image, en aval du système optique d'entrée 110, est représenté selon une vue en perspective selon un second angle de vue.

A la figure 7B, la matrice 320 d'éléments optiques 321, selon ce troisième mode de réalisation, est représentée selon une vue de face.

La figure 8 illustre un quatrième mode de réalisation d'une matrice d'éléments optiques d'une caméra plénoptique utilisée dans le procédé selon l'invention.

Ce mode de réalisation est une combinaison du mode de réalisation des figures 6A, 6B, et 7A, 7B.

En particulier, la grille de répartition 840 est l'image d'une grille objet, par un système optique d'entrée présentant de la distorsion.

La grille objet est formée d'une première série de lignes droites et d'une seconde série de lignes droites.

Les distances entre deux lignes directement voisines de la première série de lignes de la grille objet sont réparties de façon irrégulière, et/ou les distances entre deux lignes directement voisines de la seconde série de lignes de la grille objet sont réparties de façon irrégulière.

De préférence, les répartitions irrégulières sont aléatoires.

Les distances entre deux lignes directement voisines de la première série de lignes de la grille objet sont avantageusement comprises entre 95% et 105% d'une première valeur moyenne, et/ou les distances entre deux lignes directement voisines de la seconde série de lignes de la grille objet sont avantageusement comprises entre 95% et 105% d'une seconde valeur moyenne pouvant être égale à la première valeur moyenne.

Selon une autre variante, non représentée, la caméra plénoptique utilisée dans le procédé selon l'invention comprend une première matrice d'éléments optiques, et une seconde matrice d'éléments optiques, coplanaire avec la première matrice. La première et la seconde matrices d'éléments optiques sont légèrement décalées l'une relativement à l'autre.

Dans chacune de ces deux matrices, les centres optiques des éléments optiques peuvent être répartis selon l'un ou l'autre des exemples détaillés ci-avant.

Afin de multiplier encore un nombre de points d'échantillonnage du champ objet de la caméra plénoptique, on peut mettre en œuvre un échantillonnage dynamique.

En d'autres termes, on réalise un multiplexage temporel ou spatial de la caméra plénoptique selon différentes voies, associées à différentes séries de points d'échantillonnage de l'espace objet, de sorte que le nombre total de points d'échantillonnage de l'espace objet est augmenté.

Par exemple, chaque élément optique est monté sur un support mobile relié à un actionneur, pour piloter un déplacement de l'élément optique dans le plan π', indépendamment de la position des autres éléments optiques.

On peut ainsi déplacer les éléments optiques, pour les agencer successivement selon différentes grilles de répartition. A chaque grille de répartition correspond un certain échantillonnage de l'espace objet. Ainsi, on réalise *in fine* un échantillonnage plus dense de l'espace objet.

En variante, la matrice d'éléments optiques reste fixe, et le capteur optique matriciel est monté sur un support mobile, relié à un actionneur pour piloter un déplacement dans le plan du capteur optique matriciel.

En variante, les macro-pixels associés aux différents éléments optiques se chevauchent partiellement. Un même pixel peut alors correspondre à plusieurs éléments optiques.

Un réseau d'obturateurs pilotables tel qu'un écran à cristaux liquides est placé en amont de la matrice d'éléments optiques, pour bloquer ou laisser passer la lumière se propageant vers les éléments optiques, de sorte qu'à chaque instant un pixel ne corresponde qu'à un unique élément optique.

On définit une pluralité d'états du réseau d'obturateurs. A chaque état correspond une série différente de points d'échantillonnage de l'espace objet. En faisant varier dans le temps l'état du réseau d'obturateurs, on réalise *in fine* un échantillonnage plus dense de l'espace objet.

Selon une autre variante, la caméra plénoptique comprend, juxtaposées ou imbriquées dans le même plan, au moins deux matrices d'éléments optiques dédiées chacune à une longueur d'onde différente.

En amont de chaque élément optique se trouve un filtre passe bande, pour associer chaque élément optique à la détection d'une longueur d'onde en particulier, et définir lesdites plusieurs matrices d'éléments optiques.

A chaque matrice d'éléments optiques correspond un échantillonnage différent de l'espace objet. En fonctionnement, l'objet est éclairé successivement aux plusieurs longueurs d'onde.

## Revendications

1. Procédé de reconstruction tridimensionnelle d'une surface d'intérêt (200), à l'aide d'une caméra plénoptique comprenant un système optique d'entrée (110), un capteur optique matriciel (130) comprenant une pluralité de pixels, et une matrice (120 ; 220 ; 330 ; 420) d'éléments optiques (121; 221 ; 321 ; 421) disposée entre le système optique d'entrée et le capteur optique matriciel, **caractérisé en ce qu'**il comprend les étapes suivantes :
- détermination des coordonnées tridimensionnelles d'une série de points du champ objet de la caméra plénoptique, dits points d'échantillonnage (Pⱼ) ;
- détermination de données de calibration, associant à chaque point d'échantillonnage (Pⱼ) un ensemble d'au moins deux pixels (pₖ) du capteur optique matriciel ;
- définition d'une grille tridimensionnelle, dite grille de reconstruction, s'étendant dans le champ objet de la caméra plénoptique et dont chaque point est associé à un ou plusieurs point(s) d'échantillonnage (Pⱼ) ;
- acquisition (401) d'au moins une image de la surface d'intérêt à l'aide de la caméra plénoptique (100) ;
- à partir des données de calibration et de l'image de la surface d'intérêt, calcul (402), pour chaque point de la grille de reconstruction, de la valeur d'un indice de dissemblance (Cₙ), fonction d'une ou plusieurs dispersion(s), chaque dispersion étant représentative d'un éloignement entre les valeurs d'intensité prises, sur l'image de la surface d'intérêt, par les pixels associés au point d'échantillonnage (Pⱼ) associé lui-même audit point de la grille de reconstruction, ou par les pixels associé à l'un des points d'échantillonnage (Pⱼ) associés eux-mêmes audit point de la grille de reconstruction ;
- détermination (403) d'une répartition tridimensionnelle des points de la grille de reconstruction, affectés chacun de leur valeur de l'indice de dissemblance (Cₙ) ;
- reconstruction tridimensionnelle (404) de la surface d'intérêt.

2. Procédé selon la revendication 1, **caractérisé en ce que** les points de la grille de reconstruction sont constitués par les points d'échantillonnage (Pⱼ), et **en ce que** l'indice de dissemblance (Cₙ) d'un point de la grille de reconstruction est fonction de la dispersion entre les valeurs d'intensité prises, sur l'image de la surface d'intérêt, par les pixels associés au point d'échantillonnage (Pⱼ) correspondant.

3. Procédé selon la revendication 1, **caractérisé en ce que** la grille de reconstruction est une grille régulière, et **en ce que** l'étape de calcul, pour chaque point de la grille de reconstruction, de la valeur d'un indice de dissemblance (Cₙ), comprend :
- une attribution, à tous les points de la grille de reconstruction situés à une distance d'un point d'échantillonnage supérieure à un seuil prédéterminé, d'une même valeur de l'indice de dissemblance, dite valeur d'extremum ; et
- pour chacun des autres points de la grille de reconstruction, un calcul, pour chaque point d'échantillonnage associé à ce point de la grille de reconstruction, de la dispersion entre les valeurs d'intensités prises sur l'image de la surface d'intérêt par les pixels associés audit point d'échantillonnage, et une combinaison des plusieurs dispersions calculées pour obtenir l'indice de dissemblance.

4. Procédé selon l'une quelconque des revendications 1 à 3, **caractérisé en ce que** la reconstruction tridimensionnelle met en œuvre la recherche d'une surface (200') située dans le champ objet de la caméra plénoptique (100), passant par une série de points de la grille de reconstruction associée à une valeur cumulée minimale des valeurs de l'indice de dissemblance (Cₙ).

5. Procédé selon l'une quelconque des revendications 1 à 4, **caractérisé en ce que** la reconstruction tridimensionnelle (404) met en œuvre un algorithme de coupe minimale.

6. Procédé selon l'une quelconque des revendications 1 à 4, **caractérisé en ce que** la reconstruction tridimensionnelle (404) met en œuvre un algorithme de programmation dynamique, considérant des sous-ensembles d'éléments optiques (121 ; 221 ; 321 ; 421) de la matrice d'éléments optiques.

7. Procédé selon l'une quelconque des revendications 1 à 6, **caractérisé en ce que** les étapes de détermination des coordonnées tridimensionnelles des points d'échantillonnage (Pⱼ) et de détermination des données de calibration comprennent les sous-étapes suivantes :
- pour chaque couple d'un élément optique (121 ; 221 ; 321 ; 421) de la matrice d'éléments optiques, et un pixel (pₖ) du capteur optique matriciel associé à cet élément optique, détermination d'un rayon image (R'ᵢ) reliant le centre optique de l'élément optique et le centre du pixel ;
- pour chaque rayon image (R'ᵢ) ainsi déterminé, calcul d'un rayon objet (Rᵢ) correspondant, conjugué du rayon image par le système optique d'entrée (110) ;
- détermination de l'ensemble des points d'intersection (Pⱼ) entre au moins deux rayons objet (Rᵢ), situés dans le champ objet de la caméra plénoptique, ces points d'intersection formant les points d'échantillonnage ; et
- détermination des données de calibration en identifiant, pour chaque point d'échantillonnage, les au moins deux rayons objet correspondant, ces rayons objet étant associés eux-mêmes à au moins deux rayons image, et au moins deux pixels (pₖ) du capteur optique matriciel (130).

8. Procédé selon l'une quelconque des revendications 1 à 7, **caractérisé en ce que** les étapes de détermination des coordonnées tridimensionnelles des points d'échantillonnage (Pⱼ) et de détermination des données de calibration comprennent les sous-étapes suivantes :
- déplacement d'un point lumineux dans le champ objet de la caméra plénoptique (100) ;
- pour chaque position du point lumineux, détermination de la présence ou l'absence d'au moins deux pixels (pₖ) illuminés sur le capteur optique matriciel (130), pour identifier les points d'échantillonnage (Pⱼ) ; et
- pour chaque point d'échantillonnage (Pⱼ) ainsi identifié, identification des au moins deux pixels (pₖ) illuminés, pour déterminer l'ensemble correspondant d'au moins deux pixels du capteur optique matriciel.

9. Procédé selon l'une quelconque des revendications 1 à 8, **caractérisé en ce que** l'étape d'acquisition d'une image de la surface d'intérêt est mise en œuvre à l'aide d'une caméra plénoptique dans laquelle :
- les centres optiques des éléments optiques (221) de la matrice (220) d'éléments optiques sont répartis selon une grille de répartition (640), aux points d'intersection entre une première série de lignes droites (641) et une seconde série de lignes droites (642) de cette grille de répartition ; et
- les lignes (641) de la première série de lignes de la grille de répartition sont réparties à intervalles irréguliers et/ou les lignes (642) de la seconde série de lignes de la grille de répartition sont réparties à intervalles irréguliers.

10. Procédé selon la revendication 9, **caractérisé en ce que** l'étape d'acquisition d'une image de la surface d'intérêt est mise en œuvre à l'aide d'une caméra plénoptique dans laquelle les distances entre deux lignes directement voisines de la première série de lignes (641) de la grille de répartition (640) sont comprises entre 95% et 105% d'une première valeur moyenne, et/ou les distances entre deux lignes directement voisines de la seconde série de lignes (642) de la grille de répartition (640) sont comprises entre 95% et 105% d'une seconde valeur moyenne pouvant être égale à la première valeur moyenne.

11. Procédé selon la revendication 9 ou 10, **caractérisé en ce que** l'étape d'acquisition d'une image de la surface d'intérêt est mise en œuvre à l'aide d'une caméra plénoptique dans laquelle les distances entre deux lignes directement voisines de la première série de lignes (641) de la grille de répartition (640) sont réparties de façon aléatoire, et/ou les distances entre deux lignes directement voisines de la seconde série de lignes (642) de la grille de répartition (640) sont réparties de façon aléatoire.

12. Procédé selon l'une quelconque des revendications 1 à 11, **caractérisé en ce que** l'étape d'acquisition d'une image de la surface d'intérêt est mise en œuvre à l'aide d'une caméra plénoptique dans laquelle :
- les centres optiques des éléments optiques (321) de la matrice (320) d'éléments optiques sont répartis selon une grille de répartition (740), aux points d'intersection entre une première série de lignes et une seconde série de lignes de cette grille de répartition ;
- une grille objet (750), dont la grille de répartition est l'image par le système optique d'entrée (110), est constituée d'une première série de lignes droites, parallèles entre elles, et d'une seconde série de lignes droites, parallèles entre elles et sécantes avec les lignes de la première série de lignes ; et
- les lignes de la première et de la seconde séries de lignes de la grille de répartition (740) comprennent une pluralité de lignes courbes.

13. Procédé selon la revendication 12, **caractérisé en ce que** l'étape d'acquisition d'une image de la surface d'intérêt est mise en œuvre à l'aide d'une caméra plénoptique dans laquelle les lignes de la première série de lignes de la grille objet sont réparties à intervalles irréguliers et/ou les lignes de la seconde série de lignes de la grille objet sont réparties à intervalles irréguliers.

14. Procédé selon l'une quelconque des revendications 1 à 13, **caractérisé en ce qu'**il comprend l'acquisition de plusieurs images de la surface d'intérêt à l'aide de la caméra plénoptique (100), associées à une pluralité de conditions d'éclairage de la surface d'intérêt, et **en ce que** l'indice de dissemblance associé à chaque point de la grille de reconstruction, est obtenu en combinant des dispersions associées à un même point d'échantillonnage et à chacune parmi les plusieurs conditions d'éclairage.

15. Dispositif de reconstruction tridimensionnelle comprenant une caméra plénoptique (100), et configuré pour mettre en œuvre les étapes du procédé selon l'une quelconque des revendications 1 à 14, **caractérisé en ce qu'**il comprend :
- une mémoire, pour stocker les données de calibration ; et
- des moyens de calcul, configurés pour déterminer les coordonnées tridimensionnelles des points d'échantillonnage ainsi que les données de calibration, et pour recevoir en entrée l'image acquise par la caméra plénoptique et les données de calibration, calculer la valeur de l'indice de dissemblance (Cₙ) pour chaque point de la grille de reconstruction, déterminer une répartition tridimensionnelle des points de la grille de reconstruction affectés chacun de leur valeur de l'indice de dissemblance (Cₙ), et fournir en sortie une reconstruction tridimensionnelle de la surface d'intérêt.

## Patentansprüche

1. Verfahren zur dreidimensionalen Rekonstruktion einer Fläche von Interesse (200) mit Hilfe einer plenoptischen Kamera, umfassend ein optisches Eintrittssystem (110), einen optischen Matrixsensor (130) mit einer Vielzahl von Pixeln, und eine Matrix (120; 220; 330; 420) aus optischen Elementen (121; 221; 321; 421), die zwischen dem optischen Eintrittssystem und dem optischen Matrixsensor angeordnet ist, **dadurch gekennzeichnet, dass** es die folgenden Schritte umfasst:
- Bestimmen der dreidimensionalen Koordinaten einer Reihe von Punkten des Objektfeldes der plenoptischen Kamera, sogenannten Abtastpunkten (Pⱼ);
- Bestimmen von Kalibrierungsdaten, die jedem Abtastpunkt (Pⱼ) eine Menge von wenigstens zwei Pixeln (Pₖ) des optischen Matrixsensors zuordnen;
- Definieren eines dreidimensionalen Gitters, sogenannten Rekonstruktionsgitters, das sich in dem Objektfeld der plenoptischen Kamera erstreckt und von dem jeder Punkt einem oder mehreren Abtastpunkt(en) (Pⱼ) zugeordnet ist;
- Aufnehmen (401) wenigstens eines Bildes der Fläche von Interesse mit Hilfe der plenoptischen Kamera (100);
- Berechnen (402) des Wertes eines Unähnlichkeitsindex (Cₙ), welcher Funktion einer oder mehreren Dispersion(en) ist, anhand der Kalibrierungsdaten und des Bildes der Fläche von Interesse, für einen jeden Punkt des Rekonstruktionsgitters, wobei jede Dispersion für einen Abstand zwischen den Intensitätswerten repräsentativ ist, die auf dem Bild der Fläche von Interesse durch die Pixel aufgenommen werden, die dem Abtastpunkt (Pⱼ) zugeordnet sind, welcher selbst dem Punkt des Rekonstruktionsgitters zugeordnet ist, oder durch die Pixel, die einem der Abtastpunkte (Pⱼ) zugeordnet sind, welche selbst dem Punkt des Rekonstruktionsgitters zugeordnet sind,
- Bestimmen (403) einer dreidimensionalen Verteilung der Punkte des Rekonstruktionsgitters, denen jeweils ihr Wert des Unähnlichkeitsindex (Cₙ) zugeordnet ist;
- dreidimensionale Rekonstruktion (404) der Fläche von Interesse.

2. Verfahren nach Anspruch 1, **dadurch gekennzeichnet, dass** die Punkte des Rekonstruktionsgitters durch die Abtastpunkte (Pj) gebildet sind und dass der Unähnlichkeitsindex (Cn) eines Punktes des Rekonstruktionsgitters eine Funktion der Dispersion zwischen den Intensitätswerten ist, die auf dem Bild der Fläche von Interesse durch die dem entsprechenden Abtastpunkt (Pj) zugeordneten Pixel aufgenommen werden.

3. Verfahren nach Anspruch 1, **dadurch gekennzeichnet, dass** das Rekonstruktionsgitter ein gleichmäßiges Gitter ist und dass der Schritt des Berechnens des Wertes eines Unähnlichkeitsindex (Cₙ) für einen jeden Punkt des Rekonstruktionsgitters umfasst:
- ein Zuweisen eines gleichen Wertes des Unähnlichkeitsindex, sogenannten Extremwertes, zu allen Punkten des Rekonstruktionsgitters, die sich in einem Abstand von einem Abtastpunkt befinden, welcher größer als ein vorbestimmter Schwellwert ist; und
- für einen jeden der anderen Punkte des Rekonstruktionsgitters, ein Berechnen der Dispersion zwischen den Intensitätswerten, die auf dem Bild der Fläche von Interesse von den dem Abtastpunkt zugeordneten Pixel aufgenommen werden, für jeden diesem Punkt des Rekonstruktionsgitters zugeordneten Abtastpunkt, und ein Kombinieren der mehreren berechneten Dispersionen, um den Unähnlichkeitsindex zu erhalten.

4. Verfahren nach einem der Ansprüche 1 bis 3, **dadurch gekennzeichnet, dass** die dreidimensionale Rekonstruktion die Suche nach einer in dem Objektfeld der plenoptischen Kamera (100) befindlichen Fläche (200') vollzieht, welche durch eine Reihe von Punkten des Rekonstruktionsgitters, die einem minimalen kumulierten Wert der Werte des Unähnlichkeitsindex (Cₙ) zugeordnet ist, verläuft.

5. Verfahren nach einem der Ansprüche 1 bis 4, **dadurch gekennzeichnet, dass** die dreidimensionale Rekonstruktion (404) einen Min-Cut-Algorithmus anwendet.

6. Verfahren nach einem der Ansprüche 1 bis 4, **dadurch gekennzeichnet, dass** die dreidimensionale Rekonstruktion (404) einen dynamischen Programmierungsalgorithmus anwendet, der Teilmengen optischer Elemente (121; 221; 321; 421) der Matrix aus optischen Elementen berücksichtigt.

7. Verfahren nach einem der Ansprüche 1 bis 6, **dadurch gekennzeichnet, dass** die Schritte des Bestimmens der dreidimensionalen Koordinaten der Abtastpunkte (Pⱼ) und des Bestimmens der Kalibrierungsdaten die folgenden Teilschritte umfassen:
- für jedes Paar eines optischen Elements (121; 221; 321; 421) der Matrix aus optischen Elementen und ein diesem optischen Element zugeordnetes Pixel (Pₖ) des optischen Matrixsensors, Bestimmen eines Bildstrahls (R'ᵢ), welcher den optischen Mittelpunkt des optischen Elements und den Mittelpunkt des Pixels verbindet,
- für jeden so bestimmten Bildstrahl (R'ᵢ), Berechnen eines entsprechenden Objektstrahls (Rᵢ), Konjugierte des Bildstrahls durch das optische Eintrittssystem (110);
- Bestimmen der Menge von Schnittpunkten (Pⱼ) zwischen wenigstens zwei Objektstrahlen (Rᵢ), die sich in dem Objektfeld der plenoptischen Kamera befinden, wobei diese Schnittpunkte die Abtastpunkte bilden; und
- Bestimmen der Kalibrierungsdaten durch Identifizieren, für einen jeden Abtastpunkt, der wenigstens zwei entsprechenden Objektstrahlen, wobei diese Objektstrahlen selbst wenigstens zwei Bildstrahlen zugeordnet sind, und wenigstens zwei Pixel (pₖ) des optischen Matrixsensors (130).

8. Verfahren nach einem der Ansprüche 1 bis 7, **dadurch gekennzeichnet, dass** die Schritte des Bestimmens der dreidimensionalen Koordinaten der Abtastpunkte (Pⱼ) und des Bestimmens der Kalibrierungsdaten die folgenden Teilschritte umfassen:
- Verschieben eines Lichtpunktes in dem Objektfeld der plenoptischen Kamera (100);
- für jede Position des Lichtpunktes, Bestimmen des Vorliegens oder Nichtvorliegens von wenigstens zwei auf dem optischen Matrixsensor (130) beleuchteten Pixeln (pₖ), um die Abtastpunkte (Pj) zu identifizieren; und,
- für einen jeden so identifizierten Abtastpunkt (Pⱼ), Identifizieren der wenigstens zwei beleuchteten Pixel (pₖ), um die entsprechende Menge von wenigstens zwei Pixeln des optischen Matrixsensors zu bestimmen.

9. Verfahren nach einem der Ansprüche 1 bis 8, **dadurch gekennzeichnet, dass** der Schritt des Aufnehmens eines Bildes der Fläche von Interesse mit Hilfe einer plenoptischen Kamera durchgeführt wird, bei der:
- die optischen Mittelpunkte der optischen Elemente (221) der Matrix (220) aus optischen Elementen entsprechend einem Verteilungsgitter (640), an den Schnittpunkten zwischen einer ersten Reihe von geraden Linien (641) und einer zweiten Reihe von geraden Linien (642) dieses Verteilungsgitters verteilt sind; und
- die Linien (641) der ersten Reihe von Linien des Verteilungsgitters in ungleichmäßigen Abständen verteilt sind und/oder die Linien (642) der zweiten Reihe von Linien des Verteilungsgitters in ungleichmäßigen Abständen verteilt sind.

10. Verfahren nach Anspruch 9, **dadurch gekennzeichnet, dass** der Schritt des Aufnehmens eines Bildes der Fläche von Interesse mit Hilfe einer plenoptischen Kamera durchgeführt wird, wobei die Abstände zwischen zwei direkt benachbarten Linien der ersten Reihe von Linien (641) des Verteilungsgitters (640) im Bereich zwischen 95 % und 105 % eines ersten Mittelwertes liegen und/oder die Abstände zwischen zwei direkt benachbarten Linien der zweiten Reihe von Linien (642) des Verteilungsgitters (640) im Bereich zwischen 95 % und 105 % eines zweiten Mittelwertes, der gleich dem ersten Mittelwert sein kann, liegen.

11. Verfahren nach Anspruch 9 oder 10, **dadurch gekennzeichnet, dass** der Schritt des Aufnehmens eines Bildes der Fläche von Interesse mit Hilfe einer plenoptischen Kamera durchgeführt wird, wobei die Abstände zwischen zwei direkt benachbarten Linien der ersten Reihe von Linien (641) des Verteilungsgitters (640) zufallsbedingt verteilt sind und/oder die Abstände zwischen zwei direkt benachbarten Linien der zweiten Reihe von Linien (642) des Verteilungsgitters (640) zufallsbedingt verteilt sind.

12. Verfahren nach einem der Ansprüche 1 bis 11, **dadurch gekennzeichnet, dass** der Schritt des Aufnehmens eines Bildes der Fläche von Interesse mit Hilfe einer plenoptischen Kamera durchgeführt wird, bei der:
- die optischen Mittelpunkte der optischen Elemente (321) der Matrix (320) aus optischen Elementen entsprechend einem Verteilungsgitter (740), an den Schnittpunkten zwischen einer ersten Reihe von Linien und einer zweiten Reihe von Linien dieses Verteilungsgitters verteilt sind;
- ein Objektgitter (750), von dem das Verteilungsgitter das Bild durch das optische Eintrittssystem (110) ist, aus einer ersten Reihe von geraden Linien, die parallel zueinander verlaufen, und aus einer zweiten Reihe von geraden Linien, die parallel zueinander verlaufen und sich mit den Linien der ersten Reihe von Linien schneiden; und
- die Linien der ersten und der zweiten Reihe von Linien des Verteilungsgitters (740) eine Vielzahl von gekrümmten Linien umfassen.

13. Verfahren nach Anspruch 12, **dadurch gekennzeichnet, dass** der Schritt des Aufnehmens eines Bildes der Fläche von Interesse mit Hilfe einer plenoptischen Kamera durchgeführt wird, wobei die Linien der ersten Reihe von Linien des Objektgitters in ungleichmäßigen Abständen verteilt sind und/oder die Linien der zweiten Reihe von Linien des Objektgitters in ungleichmäßigen Abständen verteilt sind.

14. Verfahren nach einem der Ansprüche 1 bis 13, **gekennzeichnet dadurch, dass** es das Aufnehmen von mehreren Bildern der Fläche von Interesse mit Hilfe der plenoptischen Kamera (100) umfasst, die einer Vielzahl von Beleuchtungsverhältnissen der Fläche von Interesse zugeordnet sind, und dass der Unähnlichkeitsindex, welcher jedem Punkt des Rekonstruktionsgitters zugeordnet ist, durch Kombinieren von Dispersionen, die einem gleichen Abtastpunkt und jedem der mehreren Beleuchtungsverhältnisse zugeordnet sind, erhalten wird.

15. Vorrichtung zur dreidimensionalen Rekonstruktion, die eine plenoptische Kamera (100) umfasst und dazu ausgelegt ist, die Schritte des Verfahrens nach einem der Ansprüche 1 bis 14 durchzuführen, **dadurch gekennzeichnet, dass** sie umfasst:
- einen Speicher zum Speichern der Kalibrierungsdaten; und
- Berechnungsmittel, die dazu ausgelegt sind, die dreidimensionalen Koordinaten der Abtastpunkte sowie die Kalibrierungsdaten zu bestimmen und als Eingabe das von der plenoptischen Kamera aufgenommene Bild und die Kalibrierungsdaten zu erhalten, den Wert des Unähnlichkeitsindex (Cₙ) für jeden Punkt des Rekonstruktionsgitters zu berechnen, eine dreidimensionale Verteilung der Punkte des Rekonstruktionsgitters, denen jeweils ihr Wert des Unähnlichkeitsindex (Cₙ) zugeordnet ist, zu bestimmen und als Ausgabe eine dreidimensionale Rekonstruktion der Fläche von Interesse bereitzustellen.

## Claims

1. A method for a three-dimensional reconstruction of a surface of interest (200), using a plenoptic camera comprising an input optical system (110), a matrix optical sensor (130) comprising a plurality of pixels, and a matrix (120; 220; 330; 420) of optical elements (121; 221; 321; 421) which is disposed between the input optical system and the matrix optical sensor, **characterised in that** it comprises the following steps of:
- determining three-dimensional coordinates of a series of points of the object field of the plenoptic camera, called sampling points (Pⱼ);
- determining calibration data, associating a set of at least two pixels (pₖ) of the matrix optical sensor with each sampling point (Pⱼ);
- defining a three-dimensional array, called reconstruction array, extending in the object field of the plenoptic camera and each point of which is associated with one or more sampling point(s) (Pⱼ);
- acquiring (401) at least one image of the surface of interest using the plenoptic camera (100);
- from the calibration data and the image of the surface of interest, calculating (402), for each point of the reconstruction array, the value of a dissimilarity index (Cₙ), being a function of one or more dispersion(s), each dispersion being representative of a remoteness between the intensity values taken, on the image of the surface of interest, by the pixels associated with the sampling point (Pⱼ) itself associated with said point of the reconstruction array, or by the pixels associated with one of the sampling points (Pⱼ) themselves associated with said point of the reconstruction array;
- determining (403) a three-dimensional distribution of the points of the reconstruction array, each assigned with their value of the dissimilarity index (Cₙ);
- three-dimensionally reconstructing (404) the surface of interest.

2. The method according to claim 1, **characterised in that** the points of the reconstruction array consist of the sampling points (Pⱼ), and **in that** the dissimilarity index (Cₙ) of a point of the reconstruction array is a function of the dispersion between the intensity values taken, on the image of the surface of interest, by the pixels associated with the corresponding sampling point (Pⱼ).

3. The method according to claim 1, **characterised in that** the reconstruction array is a regular array, and **in that** the step of calculating, for each point of the reconstruction array, the value of a dissimilarity index (Cₙ), comprises:
- allocating, to all the points of the reconstruction array which are located at a distance from a sampling point higher than a predetermined threshold, a same value of the dissimilarity index, called an extremum value; and
- for each of the other points of the reconstruction array, calculating, for each sampling point associated with this point of the reconstruction array, the dispersion between the intensity values taken on the image of the surface of interest by the pixels associated with said sampling point, and combining the plurality of calculated dispersions to obtain the dissimilarity index.

4. The method according to any of claims 1 to 3, **characterised in that** the three-dimensional reconstruction implements searching for a surface (200') located in the object field of the plenoptic camera (100), passing through a series of points of the reconstruction array, which series is associated with a minimum cumulative value of the values of the dissimilarity index (Cₙ).

5. The method according to any of claims 1 to 4, **characterised in that** the three-dimensional reconstruction (404) implements a min-cut algorithm.

6. The method according to any of claims 1 to 4, **characterised in that** the three-dimensional reconstruction (404) implements a dynamic programming algorithm, considering sub-sets of optical elements (121; 221; 321; 421) of the matrix of optical elements.

7. The method according to any of claims 1 to 6, **characterised in that** the steps of determining three-dimensional coordinates of the sampling points (Pⱼ) and determining calibration data comprise the following sub-steps of:
- for each pair of an optical element (121; 221; 321; 421) of the matrix of optical elements, and a pixel (pₖ) of the matrix optical sensor associated with this optical element, determining an image ray (R'ᵢ) connecting the optical centre of the optical element and the centre of the pixel;
- for each image ray (R'ᵢ) thus determined, calculating a corresponding object ray (R_{¡}), conjugate of the image ray by the input optical system (110);
- determining all the points of intersection (Pⱼ) between at least two object rays (Rᵢ), located in the object field of the plenoptic camera, these points of intersection forming the sampling points; and
- determining the calibration data by identifying, for each sampling point, the at least two corresponding object rays, these object rays being themselves associated with at least two image rays, and at least two pixels (pₖ) of the matrix optical sensor (130).

8. The method according to any of claims 1 to 7, **characterised in that** the steps of determining the three-dimensional coordinates of the sampling points (Pⱼ) and determining the calibration data comprise the following sub-steps of:
- moving a light point in the object field of the plenoptic camera (100);
- for each position of the light point, determining the presence or absence of at least two pixels (pₖ) illuminated on the matrix optical sensor (130), to identify the sampling points (Pⱼ); and
- for each sampling point (Pⱼ) thus identified, identifying the at least two illuminated pixels (pₖ), to determine the corresponding set of at least two pixels of the matrix optical sensor.

9. The method according to any of claims 1 to 8, **characterised in that** the step of acquiring an image of the surface of interest is implemented using a plenoptic camera in which:
- the optical centres of the optical elements (221) of the matrix (220) of optical elements are distributed according to a distribution array (640), at the points of intersection between a first series of straight lines (641) and a second series of straight lines (642) of this distribution array; and
- the lines (641) of the first series of lines of the distribution array are distributed at irregular intervals and/or the lines (642) of the second series of lines of the distribution array are distributed at irregular intervals.

10. The method according to claim 9, **characterised in that** the step of acquiring an image of the surface of interest is implemented using a plenoptic camera in which the distances between two directly neighbouring lines of the first series of lines (641) of the distribution array (640) are between 95% and 105% of a first mean value, and/or the distances between two directly neighbouring lines of the second series of lines (642) of the distribution array (640) are between 95% and 105% of a second mean value that can be equal to the first mean value.

11. The method according to claim 9 or 10, **characterised in that** the step of acquiring an image of the surface of interest is implemented using a plenoptic camera in which the distances between two directly neighbouring lines of the first series of lines (641) of the distribution array (640) are randomly distributed and/or the distances between two directly neighbouring lines of the second series of lines (642) of the distribution array (640) are randomly distributed.

12. The method according to any of claims 1 to 11, **characterised in that** the step of acquiring an image of the surface of interest is implemented using a plenoptic camera in which:
- the optical centres of the optical elements (321) of the matrix (320) of optical elements are distributed according to a distribution array (740), at the points of intersection between a first series of lines and a second series of lines of this distribution array;
- an object array (750), of which the distribution array is the image through the input optical system (110), consists of a first series of straight lines, parallel to each other, and a second series of straight lines, parallel to each other, and intersecting with the lines of the first series of lines; and
- the lines of the first and the second series of lines of the distribution array (740) comprise a plurality of curved lines.

13. The method according to claim 12, **characterised in that** the step of acquiring an image of the surface of interest is implemented using a plenoptic camera in which the lines of the first series of lines of the object array are distributed at irregular intervals and/or the lines of the second series of lines of the object array are distributed at irregular intervals.

14. The method according to any of claims 1 to 13, **characterised in that** it comprises acquiring several images of the surface of interest using the plenoptic camera (100), associated with a plurality of lighting conditions of the surface of interest, and **in that** the dissimilarity index associated with each point of the reconstruction array, is obtained by combining dispersions associated with a same sampling point and to each one among the plurality of lighting conditions.

15. A three-dimensional reconstruction device comprising a plenoptic camera (100), and configured to implement the steps of the method according to any of claims 1 to 14, **characterised in that** it comprises:
- a memory, to store calibration data; and
- calculation means, configured to determine the three-dimensional coordinates of the sampling points as well as the calibration data, and to receive as an input the image acquired by the plenoptic camera and the calibration data, calculate the value of the dissimilarity index (Cₙ) for each point of the reconstruction array, determine a three-dimensional distribution of the points of the reconstruction array each assigned with their value of the dissimilarity index (Cₙ), and output a three-dimensional reconstruction of the surface of interest.
